# EUROPÄISCHE PATENTSCHRIFT

(11) **EP 1 639 925 B1**
(45) Veröffentlichungstag und Bekanntmachung des Hinweises auf die Patenterteilung: **14.11.2007**
(21) Anmeldenummer: 05020606.9
(22) Anmeldetag: 21.09.2005
(51) Int. Cl.: A47J 31/44

(54) **Milchschäumvorrichtung mit Bläschenformer**
Milk foamer with device for forming bubbles
Dispositif pour faire mousser du lait avec formation de bulles

(30) Priorität: 22.09.2004 DE 202004014737 U
(43) Veröffentlichungstag der Anmeldung: 29.03.2006
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- US-A1- 2003 172 816

## Beschreibung

Die vorliegende Erfindung betrifft eine Milchschäumvorrichtung, gemäß dem Oberbegriff von Anspruch 1.

Einfache Vorrichtungen zum Erzeugen von Milchschaum weisen eine mit dem Dampferzeuger des Kaffeezubereiters verbundene Dampfdüse auf, an dessen Auslass sich mehrere Düsenöffnungen befinden. Diese Dampfdüse wird zum Erzeugen des Milchschaums unter den Flüssigkeitsspiegel eines mit Milch gefüllten Gefäßes getaucht und der Milchbehälter in einer Aufwärts- und Abwärtsbewegung um die Dampfdüsen herum bewegt, um die gewünschte Aufschäumung der Milch zu erreichen. Die Handhabung einer solchen Dampfdüse erfordert eine gewisse Erfahrung, wobei sich ein Aufspritzen der Milch trotzdem kaum vermeiden lässt. Nachteilig bei einer solchen Dampfdüse ist es weiter, dass nur kleine Mengen von Milch in entsprechend kleinen Behältern aufgeschäumt werden können.

Weitere einfache Vorrichtungen weisen ein mit dem Dampferzeuger verbundenes Dampfrohr auf, an dessen Auslass sich eine Düsenanordnung mit Kanälen zum Ansaugen von Luft und Milch befindet. Diese Düsenanordnung wird zum Erzeugen des Milchschaums wiederum unter den Flüssigkeitsspiegel eines mit Milch gefüllten Gefäßes getaucht. Wenn die Düsenanordnung mit Dampf durchströmt wird, werden Luft und Milch durch die entsprechenden Kanäle in der Düsenanordnung angesaugt und der gewünschte Milchschaum erzeugt. Zwar können diese Vorrichtungen gegenüber einer einfachen Dampfdüse die Handhabung erleichtern, jedoch bleiben die Nachteile im Wesentlichen bestehen.

Aus der EP 195 750 B1 ist eine Milchschäumvorrichtung bekannt, die mit einer Zuführleitung für Milch versehen ist, die in einem externen Reservoir endet. Die Vorrichtung weist weiter eine Saugkammer und eine Verwirbelungsanordnung auf, welcher das aus der Saugkammer einströmende Dampf-Luft-Milchgemisch an einer Prallwand verwirbelt und dadurch die Schäumwirkung erzielt. Durch eine Öffnung in der Verwirbelungsanordnung kann der entstandene Milchschaum direkt in ein Trinkgefäß fließen. Trotz dieser verhältnismäßig aufwendigen Konstruktion weißt der Milchschaum nicht immer die gewünschten Eigenschaften auf.

Aus der EP 858 757 B1 ist eine weitere Milchschäumvorrichtung bekannt, bei der in der Unterdruckkammer ein Dampf-Luft-Milchgemisch entsteht, das von dort in eine Beruhigungsstrecke strömt, in der es komprimiert und beruhigt wird, so dass es als Milchschaum aus der Beruhigungsstrecke austritt. Um eine gute Schaumbildung zu erreichen muss die Beruhigungsstrecke relativ lang ausgebildet sein. Auch muss in einer Vormischkammer zunächst ein Luft-Milchgemisch gebildet werden, welches von dort in die Unterdruckkammer einströmt.

Eine weitere Milchschäumvorrichtung für einen Kaffeezubereiter mit Dampferzeuger beschreibt die DE 197 05 633 C2, bei der in einer Unterdruckkammer ein Milch-Dampfgemisch gebildet wird, dass durch eine sich an die Unterdruckkammer anschlie-ßende Expansionsstrecke in eine Verwirbelungsanordnung strömt. In der Verwirbelungsanordnung sind horizontale Leitschaufeln angeordnet, die derart angeordnet sind, dass das durch sie durchströmende Dampf-Milchgemisch in Rotation versetzt wird, wobei Luft angesaugt und mitgerissen wird. Dadurch einsteht ein Milchschaum mit einer hohen Luftkomponente, wodurch die gewünschte Konsistenz nicht immer erreichbar ist.

Eine gattungsgemäße Milchschäumvorrichtung ist aus der US 2003/172816 A1 bekannt. Bei dieser Milchschäumvorrichtung wird wieder ein Milch-Luftgemisch in eine Unterdruckkammer gesaugt. Der in der Druckkammer entstehende Milchschaum wird über Beruhigungskanäle zu der siebartigen Auslauföffnung geführt.

Die im Stand der Technik bekannten Milchschäumvorrichtungen für Kaffeemaschinen sind entweder schwer zu bedienen, bzw. trotz aufwendigen Konstruktionen schwer einzustellen, ohne dabei die gewünschte Milchschaum-Konsistenz zu gewährleisten. Auch ist insbesondere bei aufwendigen Konstruktionen die Reinigung der Milchschäumvorrichtungen häufig mit Problemen behaftet.

Der vorliegenden Erfindung liegt daher die Aufgabe zugrunde, eine Milchschäumvorrichtung bereitzustellen, auf einer relativ einfachen Konstruktion beruht und trotzdem eine möglichst gute Schaumerzeugung und eine einfache Reinigung ermöglicht.

Diese Aufgabe wird für eine gattungsgemäße Milchschäumvorrichtung durch die Merkmale des kennzeichnenden Teils von Anspruch 1 gelöst.

Durch die erfindungsgemäße Ausgestaltung der Milchschäumvorrichtung eines Kaffeezubereiters wird ein Aufschäumen der angesaugten Milch ohne eine vorherige Beimischung von Luft oder ein Verwirbeln des Milch-Dampfgemisches mit Luft erreicht. Dabei wird in der Milchschäumvorrichtung vor dem Sieb, d. h. weder in der Saugkammer noch in der Düse ein Ansaugen oder eine Beimischung von Luft bewirkt. Als Sieb ist jeder Strahlteiler mit einer Gitterstruktur verwendbar, beispielsweise auch mechanisch oder in einem Ätzverfahren hergestellte Lochscheiben, wobei das Sieb auch durch mehrere beabstandete Lagen eines Strahlteilers mit Gitterstruktur ausgebildet sein kann.

Zur Erzeugung eines feinen und gleichmäßigen Milchschaums kann die Milchschäumvorrichtung eine Schäumkammer umfassen, die zwischen dem Sieb und der mindestens einen Auslauföffnung angeordnet ist. Dabei kann bevorzugt die Milchschäumvorrichtung ein Auslaufabschnitt umfassen, in dem die Schäumkammer und die mindestens eine Auslauföffnung ausgebildet sind. Dadurch kann die zur Ausbildung der Milchschäumvorrichtung notwendige Anzahl von Bauteilen verringert werden. Weiter ist durch den Auslaufabschnitt eine feinere Abstimmung zwischen der Schäumkammer und der Auslauföffnung möglich.

Eine günstige Ausführungsform sieht vor, dass die Milchschäumvorrichtung eine Ausdehnungskammer umfasst, die zwischen dem Düsenabschnitt und dem Sieb angeordnet ist. Diese Ausdehnungskammer ermöglicht eine bessere, großflächige Verteilung des aus dem Düsenabschnitt austretenden Dampf-Milchgemisches vor dem Auftreffen auf das Sieb und gewährleistet so eine optimale Schaumerzeugung. Mittels der Ausdehnungskammer ist weiter der Abstand zwischen der Düse und dem Sieb gut einstellbar.

Eine vorteilhafte Ausgestaltung sieht vor, dass ein Ausdehnungsabschnitt vorgesehen ist, in dem die Ausdehnungskammer ausgebildet ist, wobei das Sieb stromabwärts der Ausdehnungskammer an dem Ausdehnungsabschnitt angeordnet ist. Durch den Ausdehnungsabschnitt lässt sich in einfacher Weise eine Ausdehnungskammer ausbilden, die durch das an dem Ausdehnungsabschnitt ausgebildete Sieb begrenzt ist. So kann auch für die Anordnung des Siebes auf zusätzliche Bauteile verzichtet werden. Auch lässt sich auf diese Weise das Sieb in Bezug auf die Ausdehnungskammer gut ausrichten. Für eine sichere Befestigung des Siebs kann das Sieb fest mit dem Ausdehnungsabschnitt verbunden sein, bevorzugt verschweißt sein. Dabei kann der Ausdehnungsabschnitt bevorzugt aus Kunststoff hergestellt sein, wodurch sich eine sehr einfache Befestigungsmöglichkeit durch das Verschweißen des Siebes mit dem stirnseitigen Rand des Ausdehnungsabschnitts ergibt. So ist eine besonders günstige Herstellung des Ausdehnungsabschnitts mit einem integrierten Sieb möglich.

Eine zweckmäßige Variante sieht vor, dass das Sieb entfernbar gegenüber dem Düsenabschnitt angeordnet ist. Dies ermöglicht eine einfache Reinigung des Siebes sowie der gesamten Düse.

Um die Reinigung des Siebes zu verbessern und eine Reinigung der Schäumkammer zu ermöglichen, kann ebenfalls das Sieb entfernbar gegenüber der Schäumkammer angeordnet sein.

Eine weitere Ausbildung sieht vor, dass das Sieb aus einer oder mehreren beabstandeten Lagen eines feinmaschigen Gewebes ausgebildet ist. Ein feinmaschiges Gewebe ist eine einfache Form des für die Milchschäumung notwendigen Siebs, das in vielen unterschiedlichen Arten hergestellt wird, von vielen Herstellern beziehbar ist und leicht bearbeitet werden kann. Dabei kann für eine kostengünstige Lösung das feinmaschige Gewebe aus einem temperaturbeständigen Kunststoff hergestellt sein. Weiter kann das feinmaschige Gewebe in einer stabilen, robusten Ausführungsform aus nicht rostendem Edelstahl hergestellt sein, wodurch das Sieb auch belastenden Betriebsbedingungen gut widerstehen kann.

In einer Ausführungsform ist vorgesehen, dass das feinmaschige Gewebe ein Maschenweite/Drahtstärke-Verhältnis von 75/50 bis 140/110, bevorzugt ca. 100/65 aufweist. Versuche haben gezeigt, dass eine Drahtstärke von 50 bis 110 µm, bevorzugt ca. 65 µm, besonders gut geeignet ist das auftreffende Milch-Dampfgemisch zu zerteilen. Dabei wird der auftreffende Fluidstrahl regelrecht zerschnitten, so dass nur ein kleiner Anteil in den stromaufwärts liegenden Abschnitt, üblicherweise die Ausdehnungskammer, reflektiert wird. Darüber hinaus verbleibt bei solch dünnen Fadenstärken auch mehr Raum für die Öffnungen im Sieb und damit für die Öffnung zum Durchtritt des Milch-Dampfgemisches. Parallel zu der Fadenstärke ist für das Sieb eine Maschenweise, bzw. ein Lochdurchmesser, von 75 bis 140 µm, bevorzugt ca. 100 µm, vorgesehen. Durch die vielen Öffnungsränder derartig kleiner Öffnungen entstehen entsprechend viele Verwirbelungskanten, die für die gewünschte Aufschäumung des Milch-Dampfgemisches verantwortlich sind.

Um eine gute Dampfführung in der Milchschäumvorrichtung des Kaffeezubereiters zu ermöglichen, können das Dampfauslassrohr und der Düsenabschnitt koaxial zueinander angeordnet sein. Durch diese Anordnung kann der Dampfstrahl in der Saugkammer mit möglichst geringen Verlusten zur Düse weitergeleitet werden.

Vorteilhafterweise kann der Düsenabschnitt mindestens einen oberen und unteren Düsenabschnitt mit unterschiedlichen Durchmessern umfassen, wobei bevorzugt der an die Saugkammer anschließende obere Düsenabschnitt den kleinsten Durchmesser aufweist. Hierdurch wird bereits in der Düse eine gewisse Aufweitung des Dampf-Milchstrahls ermöglicht. Durch diese Düsenform kann die üblicher Weise anschließende Ausdehnungskammer kürzer ausgeführt werden und so die gesamte Milchschäumvorrichtung kompakter ausgebildet sein.

Eine bevorzugte Ausführungsform sieht vor, dass das Verhältnis der Durchmesser des Düsenabschnitts mit dem kleinsten Durchmesser zum Innendurchmesser des Dampfauslassrohrs 1,5 bis 3, bevorzugt ca. 2, beträgt. Durch das vergrößerte Durchmesserverhältnis kann der gesamte aus dem Dampfauslassrohr austretende trockene Wasserdampf gut über den Düseneintritt in die Düse geführt werden, ohne dass ein Führungstrichter notwendig ist. Auch kann die Volumenzunahme des Dampfstrahls in der Saugkammer durch die angesaugte Milch problemlos mit aufgenommen werden.

Eine weitere Ausgestaltung sieht vor, dass das Verhältnis des Innendurchmessers des Dampfauslassrohrs zum Innendurchmesser der Milchzuleitung 0,5 bis 1, bevorzugt ca. 0,75, beträgt. Dieses Durchmesserverhältnis ermöglicht ein für die Milchaufschäumung geeignetes Verhältnis von Dampf zu Milch.

Um gute Aufschäumbedingungen durch ein großflächiges Auftreffen des Milch-Dampfgemisches auf das Sieb zu realisieren kann das Verhältnis des Abstands zwischen dem Düsenabschnitt und dem Sieb zum Durchmesser des Düsenabschnitts mit dem kleinsten Durchmesser 4 bis 6, bevorzugt 4,5 bis 5, betragen.

Für die Milchschäumvorrichtung üblicher Kaffeezubereiter kann der kleinste Durchmesser des Düsenabschnitts 2,5 bis 3,5 mm, bevorzugt ca. 3 mm, betragen. Durch diese Düsengröße ist die Milchschäumvorrichtung geeignet eine Portion aufgeschäumter Milch in einer für einen üblichen Nutzer ausreichend kurzen Zeit bereitzustellen, ohne einen größer dimensionierten Dampferzeuger zu benötigen. Um eine ausreichende Dampfzufuhr zu gewährleisten, kann der Innendurchmesser des Dampfauslassrohrs 1 bis 2 mm, bevorzugt ca. 1,5 mm, betragen. Mit einem solchen Innendurchmesser ist das Dampfauslassrohr auf die in üblichen Kaffeezubereitem eingesetzten Dampferzeuger abgestimmt.

Günstigerweise kann der Innendurchmesser der Milchzuleitung 1,5 bis 2,5 mm, bevorzugt ca. 2 mm, betragen. Dieser Innendurchmesser ermöglicht eine optimale Milchzufuhr zur Saugkammer der Milchschäumvorrichtung bei einer guten Aufschäumung und Erwärmung der Milch auf Trinktemperatur durch die Milchschäumvorrichtung.

Für gute Aufschäumbedingungen können der Düsenabschnitt und das Sieb in einem Abstand von 10 bis 18 mm, bevorzugt 12 bis 16 mm, angeordnet sein.

Zur einfachen Ausgestaltung des Anschlusses an den Dampferzeuger kann die Milchschäumvorrichtung einen Dampfanschluss zum Aufnehmen des Dampfanschlussrohrs aufweisen, wobei zwischen dem Dampfanschluss und dem Dampfauslassrohr mindestens eine Dichtung, bevorzugt mindestens ein O-Ring, vorgesehen ist. Die Einbindung einer Abdichtung zwischen Dampfanschluss und Dampfauslassrohr, bevorzugt in einer umlaufenden Nut des Dampfauslassrohrs, wird eine sichere Dichtfunktion des Dampfanschlusses gewährleistet. Dies ist insbesondere auch im Hinblick auf eine Verbrennungsgefahr unvorsichtiger Benutzer des Kaffeezubereiters von großer Wichtigkeit.

Eine zweckmäßige Ausgestaltung sieht vor, dass die Saugkammer eine quasi-elliptische Form aufweist, wobei das Dampfauslassrohr mittig und die Milchzuleitung seitlich in die Saugkammer münden, und der Düsenabschnitt mittig am Boden der Saugkammer angeordnet ist. Die quasi-elliptische Form der Saugkammer bildet gemeinsam mit der Anordnung der Zuleitungen und Auslasse eine wirkungsvolle Ausgestaltung für eine sichere und gleichmäßige Zuleitung der Milch und der Zuführung des Milch-Dampfgemisches zur Düse. Dabei ist als quasi-elliptische Form eine stilisierte Ellipsenform mit graden Abschnitten zu verstehen. Der in Strömungsrichtung untenliegende Boden der Saugkammer ist abgeflacht, wobei der größte Teil des Bodens durch die Düsenöffnung eingenommen wird. An dem Boden schließt sich ein kegelstumpfförmiger Bereich an, der in einen mittleren Ringabschnitt mit gleichbleibendem Durchmesser übergeht, wobei der Ringabschnitt gleichzeitig den größten Durchmesser der quasi-elliptischen Saugkammer bildet, wobei im Bereich dieses Ringabschnitts die Milchzuleitung angeordnet ist. Oberhalb des Ringabschnitts ist wieder ein kegelstumpfförmiger Bereich angeordnet mit einer dem ersten kegelstumpfförmigen Bereich entgegengesetzten Steigung. Dieser zweite kegelstumpfförmige Bereich endet mittig in einem abgeflachten Bereich, in dem die Öffnung des Dampfeintritts angeordnet ist.

Für eine sichere Dampfzufuhr in die Saugkammer kann das Dampfauslaufrohr in die Saugkammer vorstehen, bevorzugt stromabwärts über die Milchzuleitung vorstehen. Durch ein solches Vorstehen des oberen abgeflachten, mit der Öffnung des Dampfeintritts versehenen Bereichs in die Saugkammer wird bei einer nur geringen Volumenabnahme der Saugkammer das Dampfauslassrohr näher an die Düse herangeführt und damit ein besseres Einströmverhalten des Dampfes, bzw. des Milch-Dampfgemisches, in die Düse erreicht. Mit dem Vorstehen des Dampfauslassrohrs über die Milchzuleitung wird trotz eines weiterhin relativ großen Volumens der Saugkammer eine sehr kompakte Bauweise erreicht. Dieser Hinterschnitt ermöglicht eine extrem nahe Anordnung des Dampfauslassrohrs zur Düse und so ein nahezu verlustfreies Einströmverhalten des Dampfes, bzw. des Milch-Dampfgemisches, in die Düse.

Die Erfindung bezieht sich weiter auf eine Milchschäumvorrichtung nach einem der Ansprüche 1 bis 19 zum Einsatz mit einem Kaffeezubereiter, welche eine stromaufwärts eines Dampfauslassrohrs angeordnete Saugkammer, eine in die Saugkammer mündende Milchzuleitung, einen stromabwärts der Saugkammer angeordneten Düsenabschnitt und mindestens eine Auslauföffnung umfasst, wobei zwischen dem Düsenabschnitt der mindestens einen Auslauföffnung ein Sieb angeordnet ist. Diese Milchschäumvorrichtung ermöglicht ein feinporiges Aufschäumen der angesaugten Milch ohne eine Beimischung von zusätzlicher Luft oder ein Verwirbeln des Milch-Dampfgemisches vor dem Sieb, d. h. in der Saugkammer oder in der Düse. Hierdurch entsteht ein besonders feinporiger Milchschaum, der lange seine aufgeschäumte Struktur bewahrt, ohne zusammenzufallen.

Im Folgenden werden Ausführungsbeispiele der vorliegenden Erfindung anhand der Zeichnungen näher erläutert. Es zeigen:
- Fig. 1: eine seitliche Schnittansicht durch eine Milchschäumvorrichtung eines erfindungsgemäßen Kaffeezubereiters,
- Fig. 2: eine seitliche Schnittansicht des Schäumaufsatzes aus Fig. 1,
- Fig. 3a: zeigte eine Unteransicht des Auslaufabschnitts aus Fig. 1,
- Fig. 3b: zeigt eine seitliche Schnittansicht des Auslaufabschnitts aus Fig. 1,
- Fig. 4a: zeigt eine Unteransicht einer anderen Ausführungsform des Auslaufabschnitts, und
- Fig. 4b: zeigt eine seitliche Schnittansicht des Auslaufabschnitts aus Fig. 4a.

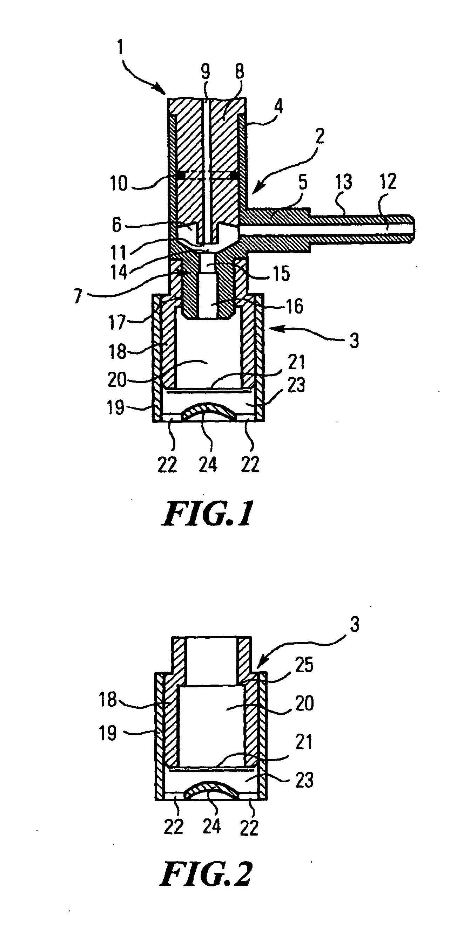

In Fig. 1 ist die erfindungsgemäße Milchschäumvorrichtung 1 zum Einsatz mit einem Kaffeezubereiter dargestellt. Der Kaffeezubereiter verfügt über ansonsten im Stand der Technik bestens bekannte Merkmale, wie Wasserbehälter, Durchlauferhitzer oder Boiler, eine Brüheinheit, einen Dampferzeuger, etc.. Die dargestellte Milchschäumvorrichtung 1 dient zum Aufschäumen und gleichzeitigem Erwärmen von Milch. Dazu weist die Milchschäumvorrichtung 1 einen Düsenteil 2 und einen Schäumaufsatz 3 auf.

Der Düsenteil 2 umfasst einen Dampfanschluss 4, einen Milchanschluss 5, eine Saugkammer 6 und einen Düsenabschnitt 7. Der Dampfanschluss 4 dient zur Aufnahme des Dampfauslassrohrs 8 mit dem Dampfkanal 9. In einer Nut des Dampfauslassrohrs 8 ist ein O-Ring 10 angeordnet, der den Spalt zwischen dem Dampfauslassrohr 8 und dem Dampfanschluss 4 gegenüber der Umgebung abdichtet. Die Auslassöffnung 11 des Dampfkanals 9 steht in die Saugkammer 6 vor. Der Milchanschluss 5 weist einen Milchkanal 12 auf, der seitlich in die Saugkammer 6 mündet. Der Milchanschluss 5 weist weiter einen Schlauchanschluss 13 auf, auf den ein flexibler Schlauch (nicht gezeigt) aufschiebbar ist, mit dem der Milchanschluss 5 mit einem mit Milch gefüllten Behälter (nicht gezeigt) verbunden ist.

Am Boden der Saugkammer 6, die in Form von zwei Kegelstümpfen und einem zwischen diesen Kegelstümpfen angeordneten Ringabschnitt ausgeformt ist, wobei die Stirnseiten der Kegelstümpfe mit den größeren Durchmessern an den mittleren Ring angrenzt und die Auslassöffnung 11 des Dampfauslassrohrs 8 von der oberen Stirnfläche der Saugkammer 6 in die Saugkammer 6 vorsteht, grenzt der Düsenabschnitt 7 mit der Düsenöffnung 14 an. Der Düsenabschnitt 7 weist einen oberen Düsenabschnitt 15 und einen unteren Düsenabschnitt 16 auf, wobei der Durchmesser des oberen Düsenabschnitts 15 kleiner als der Durchmesser des unteren Düsenabschnitts 16 ist. Der Düsenabschnitt 7 weist weiter einen äußeren Anschluss 17 in Form eines Absatzes im zylinderförmigen Mantel auf, auf dem der Schäumaufsatz 3 aufschiebbar ist.

Der Schäumaufsatz 3 besteht aus einem Ausdehnungsabschnitt 18 und einem Auslaufabschnitt 19. In dem Ausdehnungsabschnitt 18 ist die Ausdehnungskammer 20 ausgebildet, die sich zwischen dem Düsenabschnitt 7 des Düsenteils 2 und dem stirnseitig auf dem Ausdehnungsabschnitt angeordneten Siebes 21 erstreckt. Der obere Teil des Ausdehnungsabschnitts 18 ist auf dem Anschluss 17 aufgeschoben, wobei der Düsenabschnitt 7 leicht in die Ausdehnungskammer 20 vorsteht. Die Aufteilung des Ausdehnungsabschnitts 18 in einen oberen und unteren Teil mittels der Stufe 25 ist deutlich in Fig. 2 zu erkennen. Der untere Teil des Ausdehnungsabschnitts 18 ist vollständig von dem Auslaufabschnitt 19 umgeben, so dass sich im Bereich der Ausdehnungskammer 20 eine doppelte Wandung ergibt. Der Auslaufabschnitt 19 erstreckt sich unterhalb des Siebes 21 weiter bis zu den Auslauföffnungen 22. Zwischen den Auslauföffnungen 22 und dem Sieb 21 ist durch den Auslaufabschnitt 19 die Schäumkammer 23 ausgebildet. Zwischen den Auslauföffnungen 22 ist im Boden des Auslaufabschnitts 19 eine Aufwölbung 24 ausgebildet.

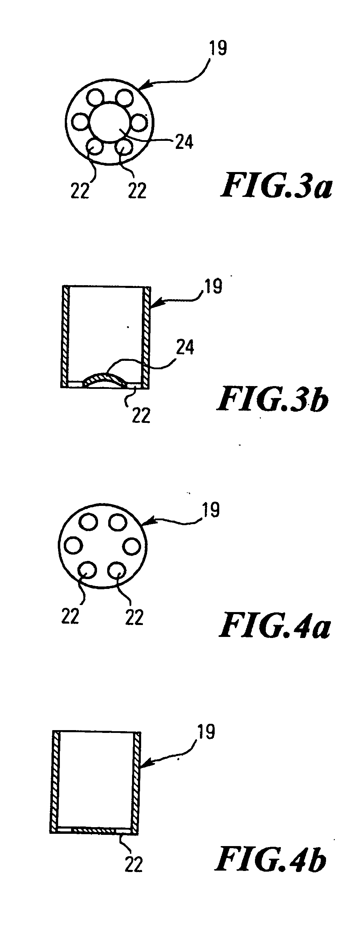

In der in Fig. 3a gezeigten Unteransicht des Auslaufabschnitts 19 sind deutlich die kreisförmig angeordneten Auslauföffnungen 22 zu sehen. Sechs Auslauföffnungen 22 gruppieren sich dabei in einem gleichmäßigen Abstand um die nach innen vorstehende Aufwölbung 24.

In den Fig. 4a und 4b ist eine weitere Ausführungsform eines Auslaufabschnittes 19 für die Verwendung mit einer Milchschäumvorrichtung 1 gezeigt. Hierbei ist der Boden des Auslaufabschnitts 19 flächig ausgebildet. Auch hier sind wiederum sechs Auslauföffnungen 22 in einem gleichen Abstand zueinander und zur Mitte des Auslaufabschnitts 19 angeordnet.

Im Folgenden wird die Wirkung und Funktionsweise der oben beschriebenen Milchschäumvorrichtung 1 näher erläutert.

Die Milchschäumvorrichtung 1 ist über das Dampfauslassrohr 8 mit dem Dampferzeuger des Kaffeezubereiters verbunden. Über den Dampfkanal 9 strömt trockener Wasserdampf in die Saugkammer 6, die mittels des O-Rings 10 zwischen dem Dampfauslassrohr 8 und dem Dampfanschluss 4 gegenüber der Umgebung abgedichtet ist. Unter Ausnutzung des Venturi-Prinzips wird mittels des in das Saugrohr einströmenden Dampfes ein Unterdruck erzeugt, der durch den Milchkanal 12 des Milchanschlusses 5 Milch aus einem nicht gezeigten Behälter ansaugt. Die in die Saugkammer 6 einströmende Milch vermischt sich hier mit dem Wasserdampf. Dabei wird die Milch erwärmt und bildet zusammen mit dem trockenen Dampf ein Milch-Dampfgemisch, das aus der Saugkammer 6 in den Düsenabschnitt 7 strömt. Dabei wird die seitlich in die Saugkammer 6 einströmende Milch von dem Dampfstrahl in die durch den Dampfkanal 9 vorgegebene Strömungsrichtung, hier in Vertikalrichtung, mitgerissen. Das Milch-Dampfgemisch strömt durch den oberen Düsenabschnitt 15 und den anschließenden unteren Düsenabschnitt 16, wobei sich im unteren Düsenabschnitt 16 der Strahl durch den leicht vergrößerten Durchmesser bereits ein wenig aufweiten kann. In der sich anschließenden Ausdehnungskammer 20 weitet sich der Strahl des aus dem Düsenabschnitt 7 austretenden Milch-Dampfgemisches weiter auf, so dass er möglichst großflächig auf das Sieb 21 am Ende der Ausdehnungskammer 20 trifft. Das Milch-Dampfgemisch trifft mit relativ hoher kinetischer Energie auf das Sieb 21. Durch das Sieb 21 wird der Flüssigkeitsstrahl vielfach zerteilt. Dabei ist der nach oben in die Ausdehnungskammer 20 reflektierte Teil äußerst gering und wird durch den nachströmenden Flüssigkeitsstrahl sofort wieder in Richtung des Siebs 21 mitgerissen. Durch die aus den Maschen des Siebs 21 austretende Vielzahl von Teilstrahlen wird in der Schäumkammer 23 eine intensive Verschäumung des Milch-Dampfgemisches erreicht. Der sich bildende Schaum kann sich in der Schäumkammer 23 beruhigen und an den Auslauföffnungen 22 als geschlossener und relativ gleichmäßiger Schaumstrahl austreten.

Je nach Ausbildung des Bodenbereichs des Auslaufabschnitts 19, als ebener Boden oder mit einer Aufwölbung 24, lassen die Auslaufbedingungen des sich in der Schäumkammer bildenden und auf den Boden des Auslaufabschnitts 19 auftreffenden Schaums variieren, wodurch sich die Schaumeigenschaften des auslaufenden Milchschaums einstellen lassen.

Durch die weit in die Saugkammer 6 vorstehende Auslassöffnung 11 des Dampfkanals 9 ergibt sich nur ein geringer Abstand zur Düsenöffnung 14, wodurch sich der Dampfstrahl trotz des Einflusses der seitlich einströmenden und von dem Dampfstrahl angesaugten Milch leicht bis zur Düsenöffnung 14 führen lässt. So kann auf eine trichterförmige Öffnung des Düsenabschnitts 7 verzichtet werden. Durch die Hinterscheidung des Milchkanals 12, d. h. das Vorstehen der Auslauföffnung 11 in Strömungsrichtung gegenüber dem Milchkanal 12, wird die Führungseigenschaft nochmals verbessert, da die auf dem Milchkanal 12 seitlich einströmende Milch nicht direkt in den Dampfstrahl einströmen kann.

Die erfindungsgemäße Milchschäumvonichtung 1 zum Einsatz mit einem Kaffeezubereiter kann in einfacher Form aus mehreren Teilen, Düsenteil 2, Ausdehnungsabschnitt 18 und Auslaufabschnitt 19, aus temperaturbeständigem Kunststoff hergestellt werden. Dabei ist das Düsenteil 2 im Hinblick auf den sich in der Saugkammer 6 bildenden Unterdruck bevorzugt aus einem starren Material herzustellen, während der Ausdehnungsabschnitt 18 und der Auslaufabschnitt 19 des Schäumaufsatzes 3 auch aus einem elastischem oder teilelastischem Werkstoff gefertigt werden können. Dabei lässt sich das Sieb 21 je nach Werkstoff in relativ einfacher Weise durch verschweißen auf der Stirnseite des Ausdehnungsabschnitts 18 anbringen.

Zum Reinigen der Milchschäumvorrichtung 1 kann nach jedem Milchschäumvorgang in gleicher Weise durch den Milchanschluss 5 Wasser in die Saugkammer 6 gefördert werden und die Säuberung der mit Milch kontaminierten Bauteile bewirken. Zur ausgiebigen Reinigung der einzelnen Bauteile, Düsenteil 2, Ausdehnungsabschnitt 18 mit Sieb 21 und Auslaufabschnitt 19 mit Auslauföffnungen 22, können die Teile in einfachster Weise auseinander genommen werden und dann sorgfältig per Hand oder in einer Spülmaschine gesäubert werden.

## Patentansprüche

1. Milchschäumvorrichtung (1) zum Einsatz mit einem Kaffeezubereiter, welche eine stromabwärts eines Dampfauslassrohrs (8) angeordnete Saugkammer (6), eine in die Saugkammer (6) mündende Milchzuleitung (5), einen stromabwärts der Saugkammer (6) angeordneten Düsenabschnitt (7) und mindestens eine Auslauföffnung (22) umfasst, wobei zwischen dem Düsenabschnitt (7) und der mindestens einen Auslauföffnung (22) ein Sieb (21) angeordnet ist,
**dadurch gekennzeichnet, dass** die Milchschäumvorrichtung (1) eine Schäumkammer (23) umfasst, die zwischen dem Sieb (21) und der mindestens einen Auslauföffnung (22) angeordnet ist.

2. Milchschäumvorrichtung (1) nach Anspruch 1,
**dadurch gekennzeichnet, dass** die Milchschäumvorrichtung (1) ein Auslaufabschnitt (19) umfasst, in dem die Schäumkammer (23) und die mindestens eine Auslauföffnung (22) ausgebildet sind.

3. Milchschäumvorrichtung (1) nach Anspruch 1 oder 2,
**dadurch gekennzeichnet, dass** die Milchschäumvorrichtung (1) eine Ausdehnungskammer (20) umfasst, die zwischen dem Düsenabschnitt (7) und dem Sieb (21) angeordnet ist.

4. Milchschäumvorrichtung (1) nach Anspruch 3,
**dadurch gekennzeichnet, dass** ein Ausdehnungsabschnitt (18) vorgesehen ist in dem die Ausdehnungskammer (20) ausgebildet ist, wobei das Sieb (21) stromabwärts der Ausdehnungskammer (20) an dem Ausdehnungsabschnitt (18) angeordnet ist.

5. Milchschäumvorrichtung (1) nach Anspruch 4,
**dadurch gekennzeichnet, dass** das Sieb (21) fest mit dem Ausdehnungsabschnitt (18) verbunden ist, bevorzugt verschweißt ist.

6. Milchschäumvorrichtung (1) nach einem der Ansprüche 1 bis 5,
**dadurch gekennzeichnet, dass** das Sieb (21) entfernbar gegenüber dem Düsenabschnitt (7) angeordnet ist.

7. Milchschäumvorrichtung (1) nach einem der Ansprüche 1 bis 6,
**dadurch gekennzeichnet, dass** das Sieb (21) entfernbar gegenüber der Schäumkammer (23) angeordnet ist.

8. Milchschäumvorrichtung (1) nach einem der Ansprüche 1 bis 7,
**dadurch gekennzeichnet, dass** das Sieb (21) aus einer oder mehreren beabstandeten Lagen eines feinmaschigen Gewebes ausgebildet.

9. Milchschäumvorrichtung (1) nach Anspruch 8,
**dadurch gekennzeichnet, dass** das feinmaschige Gewebe aus einem temperaturbeständigen Kunststoff hergestellt ist.

10. Milchschäumvorrichtung (1) nach Anspruch 8,
**dadurch gekennzeichnet, dass** das feinmaschige Gewebe aus nichtrostendem Edelstahl hergestellt ist.

11. Milchschäumvorrichtung (1) nach einem der Ansprüche 8 bis 10,
**dadurch gekennzeichnet, dass** das feinmaschige Gewebe ein Maschenweite/Drahtstärke-Verhältnis von 75/50 bis 140/110, bevorzugt ca. 100/65, aufweist.

12. Milchschäumvorrichtung (1) nach einem der Ansprüche 1 bis 11,
**dadurch gekennzeichnet, dass** der Düsenabschnitt (7) mindestens einen oberen und unteren Düsenabschnitt (15,16) mit unterschiedlichen Durchmessern umfasst, wobei bevorzugt der an die Saugkammer (6) anschließende obere Düsenabschnitt (15) den kleinsten Durchmesser aufweist.

13. Milchschäumvorrichtung (1) nach Anspruch 12,
**dadurch gekennzeichnet, dass** das Verhältnis der Durchmesser des Düsenabschnitts (15) mit dem kleinsten Durchmesser zum Innendurchmesser des Dampfauslassrohrs (8) 1,5 bis 3, bevorzugt ca. 2, beträgt.

14. Kaffeezubereiter nach Anspruch 12 oder 13,
**dadurch gekennzeichnet, dass** das Verhältnis des Innendurchmessers des Dampfauslassrohrs (8) zum Innendurchmesser der Milchzuleitung (5) 0,5 bis 1, bevorzugt ca. 0,75, beträgt.

15. Milchschäumvorrichtung (1) nach einem der Ansprüche 12 bis 14,
**dadurch gekennzeichnet, dass** das Verhältnis des Abstands zwischen dem Düsenabschnitt (7) und dem Sieb (21) zum Durchmesser des oberen Düsenabschnitts (15) mit dem kleinsten Durchmesser 4 bis 6, bevorzugt 4,5 bis 5, beträgt.

16. Milchschäumvorrichtung (1) nach einem der Ansprüche 12 bis 15,
**dadurch gekennzeichnet, dass** der kleinste Durchmesser des Düsenabschnitts (7) 2,5 bis 3,5 mm, bevorzugt ca. 3 mm, beträgt.

17. Milchschäumvorrichtung (1) nach einem der Ansprüche 1 bis 16,
**dadurch gekennzeichnet, dass** der Innendurchmesser des Dampfauslassrohrs (8) 1 bis 2 mm, bevorzugt ca. 1,5 mm, beträgt.

18. Milchschäumvorrichtung (1) nach einem der Ansprüche 1 bis 17,
**dadurch gekennzeichnet, dass** der Innendurchmesser der Milchzuleitung (5) 1,5 bis 2,5 mm, bevorzugt ca. 2 mm, beträgt.

19. Milchschäumvorrichtung (1) nach einem der Ansprüche 1 bis 18,
**dadurch gekennzeichnet, dass** der Düsenabschnitt (7) und das Sieb (21) in einem Abstand von 10 bis 18 mm, bevorzugt 12 bis 16 mm, angeordnet sind.

20. Kaffeezubereiter mit einem Dampferzeuger und einer Milchschäumvorrichtung (1) nach einem der Ansprüche 1 bis 19 mit einem Dampfauslassrohrs (8) zum Anschluss der Milchschäumvorrichtung (1).

21. Kaffeezubereiter nach Anspruch 20,
**dadurch gekennzeichnet, dass** das Dampfauslassrohr (8) und der Düsenabschnitt (7) koaxial zueinander angeordnet sind.

22. Kaffeezubereiter nach Anspruch 20 oder 21,
**dadurch gekennzeichnet, dass** die Milchschäumvorrichtung (1) einen Dampfanschluss (4) zum Aufnehmen des Dampfanschlussrohrs (8) aufweist, wobei zwischen dem Dampfanschluss (4) und dem Dampfauslassrohr (8) mindestens eine Dichtung, bevorzugt mindestens ein O-Ring (10), vorgesehen ist.

23. Kaffeezubereiter nach einem der Ansprüche 20 bis 22,
**dadurch gekennzeichnet, dass** die Saugkammer (6) eine quasi-elliptische Form aufweist, wobei das Dampfauslassrohr (8) mittig und die Milchzuleitung (5) seitlich in die Saugkammer (6) münden, und der Düsenabschnitt (7) mittig am Boden der Saugkammer angeordnet ist.

24. Kaffeezubereiter nach einem der Ansprüche 20 bis 23,
**dadurch gekennzeichnet, dass** das Dampfauslassrohr (8) in die Saugkammer (6) vorsteht, bevorzugt stromabwärts über die Milchzuleitung (5) vorsteht.

## Claims

1. Milk foaming device (1) for use with a coffee-making machine, comprising a suction chamber (6) disposed downstream of a steam outlet pipe (8), a milk inlet line (5) opening into the suction chamber (6), a nozzle portion (7) disposed downstream of the suction chamber (6) and at least one outlet orifice (22), wherein a sieve (21) is disposed between the nozzle portion (7) and the at least one outlet orifice (22),
**characterised in that** the milk foaming device (1) has a foaming chamber (23) disposed between the sieve (21) and the at least one outlet orifice (22).

2. Milk foaming device (1) as claimed in claim 1,
**characterised in that** the milk foaming device (1) has an outlet portion (19) forming the foaming chamber (23) and the at least one outlet orifice (22).

3. Milk foaming device (1) as claimed in claim 1 or 2,
**characterised in that** the milk foaming device (1) has an expansion chamber (20) disposed between the nozzle portion (7) and the sieve (21).

4. Milk foaming device (1) as claimed in claim 3,
**characterised in that** an expansion portion (18) is provided in which the expansion chamber (20) is formed and the sieve (21) is disposed on the expansion portion (18) downstream of the expansion chamber (20).

5. Milk foaming device (1) as claimed in claim 4,
**characterised in that** the sieve (21) is fixedly connected, preferably welded, to the expansion portion (18).

6. Milk foaming device (1) as claimed in one of claims 1 to 5,
**characterised in that** the sieve (21) is disposed so that it can be removed from the nozzle portion (7).

7. Milk foaming device (1) as claimed in one of claims 1 to 6,
**characterised in that** the sieve (21) is disposed so that it can be removed from the foaming chamber (23).

8. Milk foaming device (1) as claimed in one of claims 1 to 7,
**characterised in that** the sieve (21) is constructed in the form of one or more spaced apart layers of a fine-meshed fabric.

9. Milk foaming device (1) as claimed in claim 8,
**characterised in that** the fine-meshed fabric is made from a temperature-resistant plastic.

10. Milk foaming device (1) as claimed in claim 8,
**characterised in that** the fine-meshed fabric is made from stainless steel.

11. Milk foaming device (1) as claimed in one of claims 8 to 10,
**characterised in that** the fine-meshed fabric has a mesh width/wire thickness ratio of 75/50 to 140/110, preferably approximately 100/65.

12. Milk foaming device (1) as claimed in one of claims 1 to 11,
**characterised in that** the nozzle portion (7) comprises at least an upper and a lower nozzle portion (15, 16) of differing diameters, and the upper nozzle portion (15) adjoining the suction chamber (6) preferably has the smallest diameter.

13. Milk foaming device (1) as claimed in claim 12,
**characterised in that** the ratio of the diameter of the nozzle portion (15) with the smallest diameter to the internal diameter of the steam outlet pipe (8) is 1.5 to 3, preferably approximately 2.

14. Coffee-making machine as claimed in claim 12 or 13,
**characterised in that** the ratio of the internal diameter of the steam outlet pipe (8) to the internal diameter of the milk inlet line (5) is 0.5 to 1, preferably approximately 0.75.

15. Milk foaming device (1) as claimed in one of claims 12 to 14,
**characterised in that** the ratio of the distance between the nozzle portion (7) and the sieve (21) to the diameter of the top nozzle portion (15) with the smallest diameter is 4 to 6, preferably 4.5 to 5.

16. Milk foaming device (1) as claimed in one of claims 12 to 15,
**characterised in that** the smallest diameter of the nozzle portion (7) is 2.5 to 3.5 mm, preferably approximately 3 mm.

17. Milk foaming device (1) as claimed in one of claims 1 to 16,
**characterised in that** the internal diameter of the steam outlet pipe (8) is 1 to 2 mm, preferably approximately 1.5 mm.

18. Milk foaming device (1) as claimed in one of claims 1 to 17,
**characterised in that** the internal diameter of the milk inlet line (5) is 1.5 to 2.5 mm, preferably approximately 2 mm.

19. Milk foaming device (1) as claimed in one of claims 1 to 18,
**characterised in that** the nozzle portion (7) and the sieve (2) are disposed at a distance of 10 to 18 mm, preferably 12 to 16 mm.

20. Coffee-making machine with a steam generator and a milk foaming device (1) as claimed in one of claims 1 to 19, with a steam outlet pipe (8) which is connected to the milk foaming device (1).

21. Coffee-making machine as claimed in claim 20,
**characterised in that** the steam outlet pipe (8) and the nozzle portion (7) are disposed coaxially with one another.

22. Coffee-making machine as claimed in claim 20 or 21,
**characterised in that** the milk foaming device (1) has a steam connector (4) for accommodating the steam connector pipe (8) and at least one seal, preferably at least one O-ring (10), is provided between the steam connector (4) and the steam outlet pipe (8).

23. Coffee-making machine as claimed in one of claims 20 to 22,
**characterised in that** the suction chamber (6) has a quasi-elliptical shape and the steam outlet pipe (8) opens centrally and the milk inlet line (5) opens from the side into the suction chamber (6), and the nozzle portion (7) is disposed centrally on the base of the suction chamber.

24. Coffee-making machine as claimed in one of claims 20 to 23,
**characterised in that** the steam outlet pipe (8) projects into the suction chamber (6), preferably downstream via the milk inlet line (5).

## Revendications

1. Dispositif pour faire mousser du lait (1) à utiliser avec une machine à café, comprenant une chambre d'aspiration (6) qui est disposée en aval d'un tube de sortie de vapeur (8), une conduite d'amenée de lait (5) qui débouche dans la chambre d'aspiration (6), une section d'injection (7) qui est disposée en aval de la chambre d'aspiration (6), et au moins une ouverture d'écoulement (22), un tamis (21) étant disposé entre la section d'injection (7) et ladite ouverture d'écoulement (22),
**caractérisé en ce qu'**il comprend une chambre de formation de mousse (23) qui est disposée entre le tamis (21) et ladite ouverture d'écoulement (22).

2. Dispositif pour faire mousser du lait (1) selon la revendication 1, **caractérisé en ce qu'**il comprend une section d'écoulement (19) dans laquelle sont formées la chambre de formation de mousse (23) et ladite ouverture d'écoulement (22).

3. Dispositif pour faire mousser du lait (1) selon la revendication 1 ou 2, **caractérisé en ce qu'**il comprend une chambre d'expansion (20) qui est disposée entre la section d'injection (7) et le tamis (21).

4. Dispositif pour faire mousser du lait (1) selon la revendication 3, **caractérisé en ce qu'**il est prévu une section d'expansion (18) dans laquelle est formée la chambre d'expansion (20), le tamis (21) étant disposé sur la section d'expansion (18) en aval de ladite chambre d'expansion (20).

5. Dispositif pour faire mousser du lait (1) selon la revendication 4, **caractérisé en ce que** le tamis (21) est relié solidement, de préférence par soudage, à la section d'expansion (18).

6. Dispositif pour faire mousser du lait (1) selon l'une des revendications 1 à 5, **caractérisé en ce que** le tamis (21) est disposé de manière à pouvoir être enlevé de la section d'injection (7).

7. Dispositif pour faire mousser du lait (1) selon l'une des revendications 1 à 6, **caractérisé en ce que** le tamis (21) est disposé de manière à pouvoir être enlevé de la chambre d'expansion (23).

8. Dispositif pour faire mousser du lait (1) selon l'une des revendications 1 à 7, **caractérisé en ce que** le tamis (21) est formé d'une ou plusieurs couches espacées de tissu à mailles fines.

9. Dispositif pour faire mousser du lait (1) selon la revendication 8, **caractérisé en ce que** le tissu à mailles fines est fabriqué dans une matière plastique résistante aux variations de température.

10. Dispositif pour faire mousser du lait (1) selon la revendication 8, **caractérisé en ce que** le tissu à mailles fines est fabriqué en acier spécial inoxydable.

11. Dispositif pour faire mousser du lait (1) selon l'une des revendications 8 à 10, **caractérisé en ce que** le tissu à mailles fines présente un rapport largeur de mailles/épaisseur de fil de 75/50 à 140/110, de préférence d'environ 100/65.

12. Dispositif pour faire mousser du lait (1) selon l'une des revendications 1 à 11, **caractérisé en ce que** la section d'injection (7) comprend au moins une section d'injection supérieure et une section d'injection inférieure (15, 16) de diamètres différents, la section supérieure (15) qui fait suite à la chambre d'aspiration (6) présentant de préférence le plus petit diamètre.

13. Dispositif pour faire mousser du lait (1) selon la revendication 12, **caractérisé en ce que** le rapport du diamètre de la section d'injection (15) de petit diamètre au diamètre intérieur du tube de sortie de vapeur (8) est de 1,5 à 3, de préférence d'environ 2.

14. Machine à café selon la revendication 12 ou 13, **caractérisée en ce que** le rapport du diamètre intérieur du tube de sortie de vapeur (8) au diamètre intérieur de la conduite d'amenée de lait (5) est de 0,5 à 1, de préférence d'environ 0,75.

15. Dispositif pour faire mousser du lait (1) selon l'une des revendications 12 à 14, **caractérisé en ce que** le rapport de la distance entre la section d'injection (7) et le tamis (21) au diamètre de la section d'injection supérieure (15) de petit diamètre est de 4 à 6, de préférence de 4,5 à 5.

16. Dispositif pour faire mousser du lait (1) selon l'une des revendications 12 à 15, **caractérisé en ce que** le petit diamètre de la section d'injection (7) est de 2,5 à 3,5 mm, de préférence d'environ 3 mm.

17. Dispositif pour faire mousser du lait (1) selon l'une des revendications 1 à 16, **caractérisé en ce que** le diamètre intérieur du tube de sortie de vapeur (8) est de 1 à 2 mm, de préférence d'environ 1,5 mm.

18. Dispositif pour faire mousser du lait (1) selon l'une des revendications 1 à 17, **caractérisé en ce que** le diamètre intérieur de la conduite d'amenée de lait (5) est de 1,5 à 2,5 mm, de préférence d'environ 2 mm.

19. Dispositif pour faire mousser du lait (1) selon l'une des revendications 1 à 18, **caractérisé en ce que** la section d'injection (7) et le tamis (21) sont disposés à une distance de 10 à 18 mm, de préférence de 12 à 16 mm.

20. Machine à café comportant un générateur de vapeur et un dispositif pour faire mousser du lait (1) selon l'une des revendications 1 à 19, avec un tube de sortie de vapeur (8) pour raccorder le dispositif (1).

21. Machine à café selon la revendication 20, **caractérisée en ce que** le tube de sortie de vapeur (8) et la section d'injection (7) sont disposés coaxialement.

22. Machine à café selon la revendication 20 ou 21, **caractérisée en ce que** le dispositif pour faire mousser du lait (1) comporte un raccord de vapeur (4) pour recevoir le tube de sortie de vapeur (8), au moins un joint d'étanchéité, de préférence au moins un joint torique (10), étant disposé entre le raccord de vapeur (4) et le tube de sortie de vapeur (8).

23. Machine à café selon l'une des revendications 20 à 22, **caractérisée en ce que** la chambre d'aspiration (6) présente une forme quasi elliptique, le tube de sortie de vapeur (8) débouchant dans la chambre d'aspiration (6) de manière centrée et la conduite d'amenée de lait (5) sur le côté, et la section d'injection (7) étant centrée sur le fond de la chambre d'aspiration.

24. Machine à café selon l'une des revendications 20 à 23, **caractérisée en ce que** le tube de sortie de vapeur (8) entre dans la chambre d'aspiration (6), et dépasse par rapport à la conduite d'amenée de lait (5) de préférence en aval.
